# EUROPÄISCHE PATENTSCHRIFT

(11) **EP 1 634 007 B1**
(45) Veröffentlichungstag und Bekanntmachung des Hinweises auf die Patenterteilung: **24.12.2008**
(21) Anmeldenummer: 04727280.2
(22) Anmeldetag: 14.04.2004
(51) Int. Cl.: F16L 17/06, F16L 17/10, F16J 15/46

(54) **AUTOMATISCHE KUPPLUNGSVORRICHTUNG**
AUTOMATIC COUPLING DEVICE
DISPOSITIF D'ACCOUPLEMENT AUTOMATIQUE

(30) Priorität: 14.04.2003 DE 10317150
(43) Veröffentlichungstag der Anmeldung: 15.03.2006
(73) Patentinhaber: Althammer, Jürgen, 84559 Kraiburg (DE); Belimed GmbH, 84453 Mühldorf (DE)
(72) Erfinder: ALTHAMMER, Jürgen, 84559 Kraiburg (DE)
(74) Vertreter: Feldkamp, Rainer
(86) Internationale Anmeldenummer: PCT/EP2004/003924
(87) Internationale Veröffentlichungsnummer: WO 2004/090406

(56) Entgegenhaltungen:
- CH-A- 558 494
- GB-A- 1 223 846
- US-A- 5 071 140

## Beschreibung

Die Erfindung bezieht sich auf eine Kupplungsvorrichtung zum abgedichteten Kuppeln erster und zweiter relativ zueinander beweglicher Leitungsabschnitte der im Oberbegriff des Anspruchs 1 genannten Art (s. zum Beispiel GB-A-1 223 846).

Es sind Kupplungsvorrichtungen bekannt, bei denen beide Leitungsabschnitte an ihren aneinander angrenzenden Enden mit Kupplungsflanschen versehen sind, die über Befestigungsmittel miteinander verbindbar sind und zwischen denen eine Dichtung angeordnet ist, um eine Abdichtung der beiden Leitungsabschnitte gegeneinander zu erzielen. Eine einwandfreie Abdichtung kann nur dann erzielt werden, wenn die beiden Flansche mit erheblicher Kraft gegeneinander festgespannt werden. Weiterhin führen bereits kleine Abweichungen der Flansche von einer zueinander parallelen Ausrichtung zu einem Auslecken der in den Leitungsabschnitten geführten Medien (Gase oder Flüssigkeiten).

Zur Vermeidung dieses Problems ist es aus der US-A-3 761 114 bekannt, in einer Ringnut in einem der Flansche eine Dichtung anzuordnen, die in der Ringnut einen doppelwandigen Abschnitt aufweist, dessen Wände am Nutboden derart miteinander verbunden sind, dass der Raum zwischen den Wänden der Dichtung mit dem Druck des Mediums in den Leitungsabschnitten beaufschlagt wird. Auf diese Weise ergibt sich eine Anpressung der Dichtung gegen die gegeneinander abzudichtenden Flächen, die mit ansteigendem Druck größer wird. Hierbei ist es jedoch erforderlich, dass die Flächen der Flansche exakt aneinander anliegen und der Druck des Mediums groß genug ist, um die Anpressung der Dichtung sicherzustellen. Weiterhin sind zusätzliche Befestigungsmittel zur Befestigung der Flansch aneinander erforderlich.

Aus der US-A-3642 289 ist eine ähnliche Anordnung bekannt, bei der in der Ringnut eines Flansches ein ringförmiger Kolben beweglich ist, der an seinen inneren und äußeren Umfangsflächen und seiner außenliegenden Stirnfläche Dichtungselemente zur Abdichtung gegenüber den Wänden der Ringnut bzw. gegenüber dem anderen Flansch aufweist. Der Raum zwischen dem Boden der Ringnut und dem Kolben wird mit einem unter Druck stehenden Medium beaufschlagt, um den Kolben gegen den anderen Flansch anzupressen. Der Kolben muss relativ exakt in der Ringnut geführt werden, da sonst die Abdichtung gegenüber der Ringnut verloren geht. Daher müssen auch hierbei die Flansche relativ exakt parallel zueinander sein, um eine einwandfreie Abdichtung zu erzielen.

Aus der o.f. GB-A-1 223 846 ist weiterhin ein Abdichtmechanismus bekannt, bei dem eine von zwei gegeneinander abzudichtenden Flächen von miteinander verbindbaren Flanschen mit einer Ringnut versehen ist, in der ein ringförmiger Körper verschiebbar angeordnet ist. Der Boden der Ringnut ist mit einer Strömungsleitung verbunden, über die Strömungsmitteldruck in den Raum zwischen dem Boden der Nut und einer diesem zugewandten Fläche des ringförmigen Körpers einzuleiten, um diesen aus der Ringnut heraus und gegen die jeweils andere abzudichtende Fläche zu drücken. Es sind Anschlageinrichtungen zur Begrenzung der Bewegung des ringförmigen Körpers aus der Ringnut heraus sowie gegebenenfalls mechanische Vorspanneinrichtungen zum Vorspannen des ringförmigen Körpers gegen die andere Fläche vorgesehen. Der ringförmige Körper trägt elastische Dichtungsringe zur Abdichtung dieses Körpers gegenüber den Wänden der Ringnut sowie gegenüber der anderen Fläche.

Bei den bekannten Kupplungsvorrichtungen ergeben sich somit Konstruktionen, die bei Anwendungen, in denen es auf größte Reinheit ankommt, nur schwierig zu handhaben sind, da sie aus vielen einzelnen Teilen bestehen, die zur Reinigung und gegebenenfalls Sterilisation voneinander getrennt werden müssen. Dies gilt insbesondere, wenn die Kupplungsvorrichtung bei Reinigung-, Desinfektions- und Trocknungsanlagen für die Aufbereitung von Zubehörteilen bzw. allgemeinen Waschgütern in der Krankenhaus- und Pharmaproduktion verwendet werden soll.

Bei Geschirrspülmaschinen mit radialem Versatz zwischen den miteinander zu kuppelnden Leitungsabschnitten ist es weiterhin aus der DE 199 26 962 bekannt, an einem Flansch eine Balgdichtung zu befestigen, während der andere Flansch zumindest in einer Radialrichtung relativ großflächig ausgebildet ist, um bei einer radialen Verschiebung der beiden Rohrabschnitte eine Anlage der Balgdichtung zu gewährleisten. Die Anpressung der Balgdichtung an den beweglichen Flansch erfolgt hierbei ausschließlich mechanisch.

Der Erfindung liegt die Aufgabe zugrunde, eine einfach zu reinigende Kupplungsvorrichtung zum abgedichteten Kuppeln erster und zweiter relativ zueinander beweglicher Leitungsabschnitte der eingangs genannten Art zu schaffen, die bei einfachem Aufbau eine sichere Abdichtung auch dann sicherstellt, wenn die gegeneinander abzudichtenden Flächen nicht exakt miteinander ausgerichtet sind.

Diese Aufgabe wird durch die im Anspruch 1 angegebenen Merkmale gelöst.

Vorteilhafte Ausgestaltungen und Weiterbildungen der Erfindung ergeben sich aus den jeweiligen Unteransprüchen.

Dadurch, dass das Dichtungselement ein Dichtring aus elastischem Material ist, der einen kreisrunden Querschnitt aufweist, ergibt sich bei einfachem Aufbau eine einwandfreie Abdichtung der Flansche gegeneinander selbst dann, wenn diese nicht exakt parallel zueinander sind oder die Flansche radial gegeneinander verschoben sind. Die Elastizität des Dichtringes gleicht kleinere Ungenauigkeiten aus. Die Ringnut ist weiterhin mit Unterdruck beaufschlagbar, um den Dichtring in das Innere der Ringnut anzusaugen, so dass sich bei bei einer Verschiebung der miteinander zu kuppelnden Leitungsabschnitte quer zu deren Längsrichtung keine Gefahr einer Beschädigung des Dichtringes ergibt.

Die Ringnut weist bei einer bevorzugten Ausführungsform mindestens einen Kanal auf, der zur Herstellungs des Dichteingriffs mit Druckluft und zum Zurückziehen des Dichtringes mit Unterdruck beaufschlagbar ist, wobei der Kanal in den Boden der Ringnut mündet.

Eine bevorzugte Anwendung der Erfindung ergibt sich bei Reinigungs-, Desinfektions- und Trocknungsanlagen für die Aufbereitung von Zubehörteilen bzw. allgemeinen Waschgütern in der Krankenhaus- und Pharmaproduktion.

Die Kupplungsvorrichtung kann hierbei zwischen einem Aufnahmewagen und einer Kabineneinspeisung zum Zwecke des Anschlussess von Sprühknöpfen und Düsen in dem Aufnahmewagen angeordnet werden.

Die Erfindung wird nachfolgend anhand einer in der Zeichnung dargestellten Ausführungsform noch näher erläutert.

### In den Zeichnungen zeigen:

Figur 1 eine Ausführungsform der Kupplungsvorrichtung in einem Zustand ohne Dichtungseingriff, und

Figur 2 die Ausführungsform der Kupplungsvorrichtung nach Figur 1 bei Dichtungseingriff der miteinander zu kuppelnden Teile.

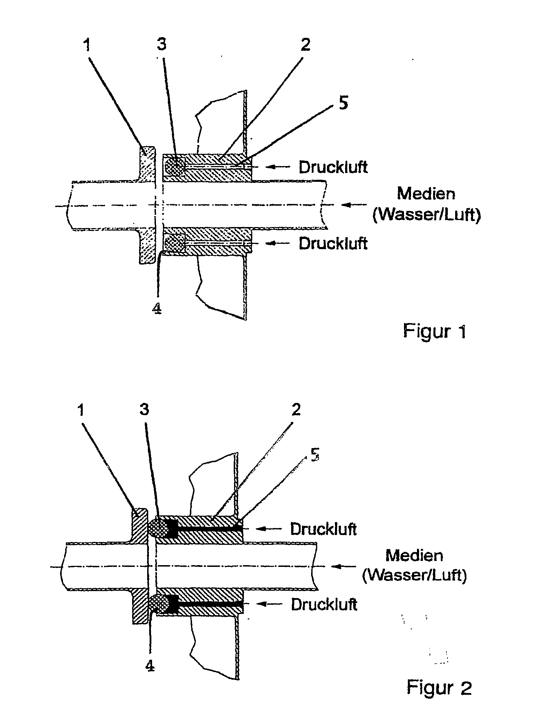

Die in Figur 1 gezeigte Ausführungsform der Kupplungsvorrichtung weist einen mit einen ersten Leitungsabschnitt verbundenen ersten Flansch 1 und einen mit einen zweiten Leitungsabschnitt verbundenen zweiten Flansch 2 auf, die gegeneinander abgedichtet werden sollen. Zu diesem Zweck ist in der auf den ersten Flansch 1 gerichteten Fläche des zweiten Flansches 2 eine Ringnut 4 angeordnet, in deren Boden ein Kanal 5 mündet, der mit einem unter Druck stehenden Medium, wie zum Beispiel Druckluft beaufschlagbar ist.

In der Ringnut 4 ist ein aus elastischem Material hergestellter Dichtring 3 angeordnet, der bei Zuführung von Druckluft an den Kanal 5 teilweise aus der Ringnut 4 heraus gegen die zugewandte Stirnfläche des Flansches 1 gepreßt wird und die Abdichtung der Flansche 1, 2 gegeneinander bewirkt.

Bei Zuführung von Unterdruck an den Kanal 5 wird der Dichtring 3 in in die Ringnut 4 hineingezogen, so dass eine freie radiale Verschiebung der Flansche 1, 2 gegeneinander ohne Abnutzung des Dichtringes 3 ermöglicht wird.

Durch die Verwendung eines Dichtringes 3 ergibt sich eine einwandfreie Abdichtung der Flansche 1, 2 gegeneinander selbst dann, wenn diese nicht exakt parallel zueinander sind oder die Flansche radial gegeneinander verschoben sind. Die Elastizität des Dichtringes gleicht kleinere Ungenauigkeiten aus.

Da der Dichtring 3 leicht aus der Ringnut 4 zu entnehmen ist, ist auch bei strengen hygienischen Anforderungen eine einwandfreie Reinigung der Kupplungsvorrichtung leicht möglich, so dass die Kupplungsvorrichtung in Reinigungs-, Desinfektions- und Trocknungsanlagen für die Aufbereitung von Zubehörteilen bzw. allgemeinen Waschgütern in der Krankenhaus- und Pharmaproduktion und anderen Anlagen verwendbar ist, an die hohe Hygieneanforderungen gestellt werden.

Bei der Verwendung in einer Reinigungs-, Desinfektions- und Trocknungsanlage für die Aufbereitung von Zubehörteilen bzw. allgemeinen Waschgütern in der Krankenhaus- und Pharmaproduktion kann der Rohrabschnitt mit dem Flansch 1 an einem nicht gezeigten Aufnahmewagen befestigt sein, der in eine Waschkammer der Anlage einschiebbar ist.

Die Kupplungsvorrichtung kann hierbei zwischen dem Aufnahmewagen und einer Kabineneinspeisung zum Zwecke des Anschlussess von Sprühknöpfen und Düsen im Aufnahmewagen angeordnet werden.

Wenn der Aufnahmewagen in die Waschkammer eingeschoben wird und die Reinigungsposition erreicht, wird der Flansch 1 im Wesentlichen mit der Position der des Flansches 1 der Inneneinspeisung in der Waschkammer ausgerichtet.

Bei Schließen der Tür der Waschkammer wird der Dichtring 3 in der Ringnut 4 des Flansches 2 der Inneneinspeisung der Waschkammer mit Druckluft an den Flansch 1 der Innenanschlußkupplung des Aufnahmewagens gepreßt.

Dieser Vorgang dauert nur wenige Sekunden. Durch diese Anschlußart werden Spaltverluste im Bereich der Anschlußkupplung vermieden, so dass im Bereich der lnnenanschlußkupplung Druck- und Wasserverluste nahezu ausgeschlossen werden.

Durch die Bauart mit einer linear verschiebbarer Dichtung in Form eines Dichtringes 3, der mit Druckluft angepresst wird, wird eine automatische Ankopplung von Druckleitungen und eine optimale Anschlußform erreicht. Optimal heißt totraumfrei, weitgehende Spaltfreiheit und geringe Rauhtiefen.

Die Anlage kann in allen Reinraumklassen, welche in der Krankenhaus- und Pharmaproduktion Verwendung finden, eingesetzt werden.

Die vorstehend beschriebene Kupplungsvorrichtung ist in einer Vielzahl von Anwendungen einsetzbar, bei denen zwei relativ zueinander bewegliche Rohrleitungsabschnitte gegeneinander abgedichtet werden müssen.

## Patentansprüche

1. Kupplungsvorrichtung zum abgedichteten Kuppeln erster und zweiter relativ zueinander beweglicher Leitungsabschnitte von Reinigungs-, Desinfektions- und Trocknungsanlagen, mit an Enden der Leitungsabschnitte jeweilig befestigten Flanschen (1,2) die gegeneinander abzudichten sind, wobei in der auf den ersten Flansch (1) gerichteten Stirnfläche des zweiten Flansches (2) eine Ringnut (4) ausgebildet ist, in der ein Dichtungselement (3) angeordnet ist, und wobei die Ringnut (4) mit Druck beaufschlagbar ist, um das Dichtungselement (3) gegen die Stirnfläche des ersten Flansches anzupressen,
**dadurch gekennzeichnet, dass** das Dichtungselement ein Dichtring (3) aus elastischem Material ist, der einen kreisrunden Querschnitt aufweist, und dass die Ringnut (4) mit Unterdruck beaufschlagbar ist, um den Dichtring (3) in das Innere der Ringnut anzusaugen.

2. Kupplungsvorrichtung nach Anspruch 1, **dadurch gekennzeichnet, dass** die Ringnut (4) über mindestens einen Kanal (5) mit Druckluft oder Unterdruck beaufschlagbar ist, wobei der Kanal. (5) in den Boden der Ringnut (4) mündet.

3. Kupplungsvorrichtung nach einem der vorhergehenden Ansprüche, **dadurch gekennzeichnet, dass** die Kupplungsvorrichtung zum Kuppeln der Anschlüsse eines Aufnahmewagens und einer Kabineneinspeisung einer Waschkammer in Reinigungs-, Desinfektions- und Trockungsanlagen zum Anschluß von Sprühköpfen und Düsen im Aufnahmewagen angeordnet ist, wobei der Rohrabschnitt mit dem Flansch (1) an dem Aufnahmewagen befestigt sein, der in die Waschkammer der Anlage einschiebbar ist, während der Rohrabschnitt mit dem zweiten Flansch (2) in der Waschkammer befestigt ist.

## Claims

1. A coupling device for the sealed coupling of first and second pipe sections of cleaning, disinfection and drying installations, which pipe sections are movable relative to each other,
with respective flanges (1, 2) to be sealed from one another and attached to ends of each pipe section,
in the end face of the second flange (2) directed towards the first flange (1) there being constructed an annular groove (4), in which a sealing element (3) is disposed,
and the annular groove (4) being able to be subjected to pressure so as to press the sealing element (3) against the end face of the first flange,
**characterised in that** the sealing element is a sealing ring (3) made of elastic material and having a circular cross section,
and **in that** the annular groove (4) can be subjected to underpressure in order to suck the sealing ring (3) into the interior of the annular groove.

2. A coupling device according to Claim 1,
**characterised in that** the annular groove (4) can be subjected to compressed air or underpressure, the duct (5) emerging into the bottom of the annular groove (4).

3. A coupling device according to one of the preceding Claims,
**characterised in that** the coupling device for coupling the connections of a trolley and a booth supply device of a washing chamber is disposed in cleaning, disinfection installations so as to connect spray heads and nozzles in the trolley,
the pipe section being able to be fixed to the flange (1) on the trolley, which can be pushed into the washing chamber of the installation, while the pipe section is fastened to the second flange (2) in the washing chamber.

## Revendications

1. Dispositif d'accouplement pour l'accouplement étanche de premier et second tronçons de conduites, mobiles l'un par rapport à l'autre, dans des installations de nettoyage, de désinfection et de séchage, comportant des brides (1, 2) respectivement fixées à des extrémités desdits tronçons de conduites, et dont l'étanchéité réciproque doit être assurée, la face frontale de la seconde bride (2), dirigée vers la première bride (1), présentant une rainure annulaire (4) dans laquelle un élément d'étanchement (3) est logé, et ladite rainure annulaire (4) pouvant être sollicitée par une pression afin de presser ledit élément d'étanchement (3) contre la face frontale de la première bride,
**caractérisé par le fait que** l'élément d'étanchement est une bague d'étanchement (3) en un matériau élastique, présentant une section transversale circulaire ; et **par le fait que** la rainure annulaire (4) peut être sollicitée par une dépression, afin d'aspirer ladite bague d'étanchement (3) dans l'espace interne de ladite rainure annulaire.

2. Dispositif d'accouplement selon la revendication 1, **caractérisé par le fait que** la rainure annulaire (4) peut être sollicitée par de l'air comprimé ou par une dépression, par l'intermédiaire d'au moins un canal (5), ledit canal (5) débouchant dans le fond de ladite rainure annulaire (4).

3. Dispositif d'accouplement selon l'une des revendications précédentes, **caractérisé par le fait que** ledit dispositif d'accouplement, destiné à accoupler les raccords d'un chariot récepteur et d'une alimentation de cabine d'une chambre de lavage, dans des installations de nettoyage, de désinfection et de séchage, est placé dans ledit chariot récepteur en vue du rattachement de têtes pulvérisatrices et de buses, sachant que le tronçon tubulaire muni de la bride (1) est fixé audit chariot récepteur pouvant être inséré, par coulissement, dans la chambre de lavage de l'installation, tandis que le tronçon tubulaire pourvu de la seconde bride (2) est fixé dans ladite chambre de lavage.
